(19)

Europäisches
Patentamt
European
Patent Office
Office européen
des brevets

(11)  EP 3 779 219 B1

(12)  **EUROPEAN PATENT SPECIFICATION**

(45) Date of publication and mention
of the grant of the patent:
**07.06.2023  Bulletin 2023/23**

(21) Application number: **20193697.8**

(22) Date of filing: **30.12.2016**

(51) International Patent Classification (IPC):
*F16C 33/20* *(2006.01)*

(52) Cooperative Patent Classification (CPC):
**F16C 11/04; F16C 11/045; F16C 17/02;
F16C 33/10; F16C 33/121; F16C 33/128;
F16C 33/206;** F16C 33/203; F16C 33/208;
F16C 2202/10; F16C 2208/30; F16C 2223/32;
F16C 2240/60

(54)  **CORROSION RESISTANT BUSHING**

KORROSIONSBESTÄNDIGE BUCHSE

DOUILLE RESISTANTE À LA CORROSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **31.12.2015  US 201562273634 P**

(43) Date of publication of application:
**17.02.2021  Bulletin 2021/07**

(62) Document number(s) of the earlier application(s) in
accordance with Art. 76 EPC:
**16828754.8 / 3 397 871**

(73) Proprietor: **Saint-Gobain Performance Plastics
Pampus GmbH
47877 Willich (DE)**

(72) Inventor: **HARTMANN, Juergen
88145 Hergatz (DE)**

(74) Representative: **Zimmermann & Partner
Patentanwälte mbB
Postfach 330 920
80069 München (DE)**

(56) References cited:
**EP-A1- 2 827 010       GB-A- 2 465 852
JP-A- 2015 200 339    US-A1- 2005 069 448
US-A1- 2011 049 834**

**Description**

TECHNICAL FIELD

This disclosure, in general, relates corrosion resistant bushings with a high load capability. Specifically, the present invention refers to a sliding article and a hinge assembly comprising same.

Sliding bearing composite materials consisting of a load bearing substrate and a sliding layer overlay are generally known. The load bearing substrate and the sliding layer are usually connected by laminating using a suitable adhesive. The sliding bearing composite materials can be used to form maintenance free bushing used, for example, by the automotive industry. These maintenance free bushings can be used for door, hood, and engine compartment hinges, seats, steering columns, flywheels, balancer shaft bearings, etc. Additionally, maintenance free bushings formed from the sliding bearing composite materials can also be used in non-automotive applications. In some applications, the sliding bearings are exposed to environmental conditions that lead to corrosion, especially when the load bearing substrate is made of iron alloys, such as steel.

GB 2 465 852 A describes a plastics polymer-based bearing material and a manufacturing method thereof. The material comprises a matrix of a polyimide/amide plastics polymer material and having distributed throughout the matrix from 5 to less than 15 vol% of a metal powder, preferably chosen from the group comprising aluminum, copper, silver, tungsten and stainless steel; from 1 to 15 vol% of a fluoropolymer, preferably PTFE or FEP, whereby the balance is the polyimide/amide resin apart from incidental impurities. A bearing comprising the material is also disclosed.

From JP 2015-200339 A a lining layer is known. On the lining layer, an overlay layer is formed, which overlay layer comprises a binder resin. In the binder resin, a soft metal having a particle size of between 1 and 5 $\mu$m in an amount of 30 to 70 vol% is dispersed. The soft metal is selected from the group consisting of Sn, Al, or Bi, and forms with the binder resin a sliding member.

There is an ongoing need for improved maintenance free bushings that have a longer maintenance free lifetime and improved delamination resistance or corrosion resistance a high load capability.

SUMMARY

In a first aspect, a sliding article comprises a load bearing substrate, a metal containing layer, and a sliding layer. The loadbearing substrate has a first major surface, a second major surface, and an edge. The load bearing substrate further comprises a thickness $t_1$. The metal containing layer overlies and is in direct contact with the first major surface. The metal containing layer is a corrosion protective layer and contains a metal selected from magnesium, aluminium, titanium, scandium, zinc, or any combination thereof. The metal containing layer has a thickness $t_2$ whereby $t_2$ is at least 25 $\mu$m, and not greater than 200 $\mu$m. The sliding layer overlies the first major surface or the second major surface. The ratio of $t_2/t_1$ is at least 1/10, or $t_1 \leq 10\ t_2$.

In a second aspect, a hinge assembly can include a first hinge portion and a second hinge portion, a pin joining the first hinge portion with the second hinge portion, and a bushing. The bushing is the sliding article of the first aspect.

Furthermore, a method (not part of the invention) of preparing a bushing is described that includes providing a load bearing substrate and a metal containing layer. The load bearing substrate has a first major surface and a second major surface. The metal containing layer can be cladded onto the first major surface. In another embodiment, a metal containing coating is provided by e. g. spray coating, metal spraying, mechanical coating, galvanic, hot-dipping, or any combination thereof. The method can further include applying a sliding layer over first major surface or over the second major surface to form a laminate. The method can further include cutting a blank from the laminate. The method can further include forming a bushing from the blank.

In addition, a method of preparing a corrosion resistant iron-containing article is described that includes providing a substrate. The substrate includes a first major surface and a second major surface. The substrate includes an iron containing layer. The iron containing layer can form the first major surface. The substrate can further include a metal containing layer, the metal containing layer overlying the first major surface. The method can further include cutting the substrate from the metal containing layer across the first major surface to the second major surface to form a cross-section. The method can further include forming an aluminous layer over the cross-section.

BRIEF DESCRIPTION OF THE DRAWINGS

The present disclosure may be better understood, and its numerous features and advantages made apparent to those skilled in the art by referencing the accompanying drawings.

FIGs. 1A through 1D are illustrations of the layer structure of exemplary corrosion resistant bushings.
FIGs. 2A and 2B is an illustration and detail of an exemplary hinge.

FIGs. 3A and 3B are illustrations of SEM scans.
FIG. 4 illustrates various embodiments of bushing applications.
FIG. 5 illustrates a wire comprising a core metal and a coating.
FIG. 6 illustrates a laminate for an exemplary corrosion resistant bushing.
FIG. 7 illustrates a stretch metal for an corrosion resistant bushing.

The use of the same reference symbols in different drawings indicates similar or identical items.

DETAILED DESCRIPTION OF THE PREFERRED EMBODIMENT(S)

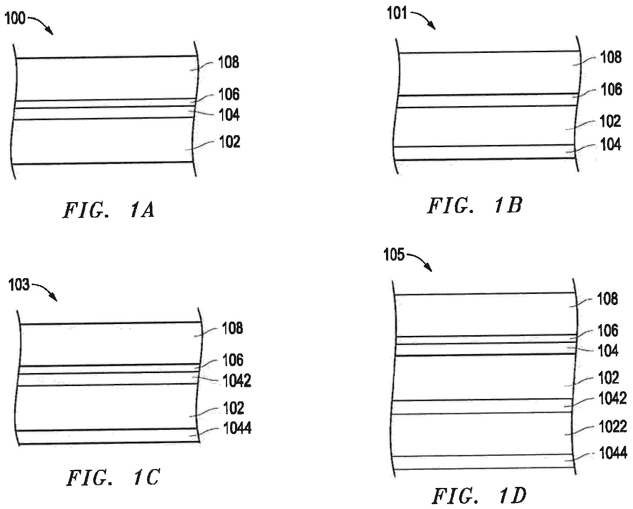

FIG. 1A shows a cross section illustrating the various layers of the corrosion resistant bushing, generally designated 100. Bushing 100 can include a load bearing substrate 102. The load bearing substrate 102 is a metallic support layer that is able to cope with high strain or high pressure. The load bearing substrate 102 can be susceptible to corrosion. The metallic support layer 102 can include a metal or metal alloy such as steel including carbon steel, spring steel, and the like, iron, or any combination thereof. In a particular embodiment, the load bearing substrate 102 can be a metal (including metal alloys), such as ferrous alloys. In one further embodiment, the load bearing substrate 102 is selected from an iron-containing substrate, a tin-containing substrate, a copper-containing substrate, a titanium-containing substrate, or any combination thereof. The load bearing substrate 102 is coated with a corrosion protection layer 104. The corrosion protection layer 104 can include aluminum or an aluminum alloy.

The load bearing substrate 102 has a thickness $t_1$. In an embodiment, $t_1$ is at least 50 $\mu$m (microns), at least 80 $\mu$m (microns), at least 100 $\mu$m (microns), at least 150 $\mu$m (microns), at least 200 $\mu$m (microns), or at least 300 $\mu$m (microns). In another embodiment, $t_1$ is not greater than 800 $\mu$m (microns), not greater than 700 $\mu$m (microns), not greater than 650 $\mu$m (microns), not greater than 600 $\mu$m (microns), not greater than 550 $\mu$m (microns), not greater than 500 $\mu$m (microns), not greater than 480 $\mu$m (microns), not greater than 460 $\mu$m (microns), not greater than 440 $\mu$m (microns), or not greater than 420 $\mu$m (microns). In yet one further embodiment, $t_1$ ranges from 50 $\mu$m (microns) to 800 $\mu$m (microns), such as from 100 $\mu$m (microns) to 600 $\mu$m (microns), from 200 $\mu$m (microns) to 500 $\mu$m (microns), or from 300 $\mu$m (microns) to 450 $\mu$m (microns). In one particular embodiment, $t_1$ ranges from 380 $\mu$m (microns) to 420 $\mu$m (microns).

The load bearing substrate is highly resilient to mechanical forces. In one embodiment, the load bearing substrate has a tensile strength of at least 120 MPa, at least 140 MPa, 160 MPa, at least 180 MPa, at least 200 MPa, at least 220 MPa, or at least 240 MPa. In yet one further embodiment, the load bearing substrate has a tensile strength of not greater than 600 MPa, not greater than 500 MPa, not greater than 450 MPa, not greater than 400 MPa, not greater than 350 MPa, not greater than 300 MPa, or not greater than 250 MPa. In another embodiment, the load bearing substrate has a yield strength in a range from 100 MPa to 2000 MPa, in a range from 150 MPa to 1500 MPa, in a range from 200 MPa to 1000 MPa, or in a range from 200 MPa to 600 MPa.

Load bearing substrates as described above often have a susceptibility to corrosion. Corrosion susceptibility can be tested according to neutral salt spray test ISO 9227:2006. In the absence of any corrosion protection, load bearing substrates that include iron, such as steel show red corrosion after 5 hrs of salt spraying.

The metal containing layer 104 has a thickness $t_2$. $t_2$ is at least 25 $\mu$m (microns), at least 30 $\mu$m (microns), at least 35 $\mu$m (microns), at least 40 $\mu$m (microns), at least 45 $\mu$m (microns), or at least 50 $\mu$m (microns). $t_2$ is not greater than 200 $\mu$m (microns), not greater than 180 $\mu$m (microns), not greater than 160 $\mu$m (microns), not greater than 140 $\mu$m (microns), not greater than 120 $\mu$m (microns), not greater than 100 $\mu$m (microns), not greater than 90 $\mu$m (microns), not greater than 80 $\mu$m (microns), not greater than 70 $\mu$m (microns), or not greater than 60 $\mu$m (microns). In yet one further embodiment, $t_2$ is in a range from 25 $\mu$m (microns) to 180 $\mu$m (microns), in a range from 30 $\mu$m (microns) to 120 $\mu$m (microns), or in a range from 40 $\mu$m (microns) to 80 $\mu$m (microns). In one particular embodiment, $t_2$ is between 45 $\mu$m (microns) and 50 $\mu$m (microns).

In one embodiment, the metal containing layer has a tensile strength of at least 50 MPa, at least 55 MPa, 60 MPa, at least 65 MPa, at least 70 MPa, at least 75 MPa, or at least 80 MPa. In another embodiment, the metal containing layer has a tensile strength of not greater than 200 MPa, not greater than 190 MPa, not greater than 180 MPa, not greater than 160 MPa, not greater than 150 MPa, not greater than 140 MPa, not greater than 130 MPa, not greater than 120 MPa, not greater than 110 MPa, or not greater than 100 MPa.

Addressing the aluminum content of the metal containing layer, in one embodiment, the metal containing layer has an aluminum content at least 20 wt%, at least 30 wt%, at least 40 wt%, at least 50 wt%, at least 60 wt%, at least 70 wt%, at least 75 wt%, at least 80 wt%, at least 85 wt%, or at least 90 wt%. In another embodiment, the aluminum content is not greater than 99.99999 wt%, not greater than 99.99 wt%, not greater than 99.95 wt%, not greater than 99.9 wt%, not greater than 99.85 wt%, not greater than 99.8 wt%, not greater than 99.5 wt%, not greater than 99 wt%, not greater than 98 wt%, not greater than 95 wt%, not greater than 93 wt%, not greater than 85 wt%, not greater than 80 wt%, not greater than 70 wt%, or not greater than 60 wt%. In one embodiment, the metal containing layer has an aluminum content in a range from 25 wt% to 99.99999 wt%, in a range from 50 wt% to 99.99 wt%, in a range from 90 wt% to 99.99 wt%, or in a range from 95 wt% to 99.9 wt%.

As discussed above, the metal containing layer can have an aluminum content that is not the majority component. Thus, the aluminum content can be not greater than 50 wt%, not greater than 45 wt%, not greater than 40 wt%, not greater than 35 wt%, not greater than 30 wt%, or not greater than 25 wt%. For example, in one embodiment, the metal containing layer can contain another metal selected from the group of lithium, beryllium, sodium, magnesium, scandium, titanium, vanadium, chromium, manganese, iron, cobalt, nickel, copper, silicon, and zinc. In one particular embodiment, the metal containing layer includes an aluminum magnesium alloy, such as $Al_xMg_y$, wherein x is selected from 0.1, 0.2, 0.25, 0.33, 0.5, and x+y=1.

In yet one further embodiment, the metal containing layer has a structured surface. For example, the metal containing layer has a structured surface comprising wall-like depressions, wall-like elevations, or any combination thereof. The wall-like depressions or wall-like elevations can have a height in a range of 0.1 $\mu$m (microns) to 30 $\mu$m (microns), in a range of 1 $\mu$m (micron) to 20 $\mu$m (microns), or 2 $\mu$m (microns) to 15 $\mu$m (microns). In one embodiment, the structured surface can include regular polygon patterns, such as triangular patterns, rectangular patterns, square patterns, pentagon patterns, hexagon patterns, higher polygon patterns, and combination thereof. The patterns can be depressions into the aluminum layer, elevations from the aluminum layer, or combination thereof. In one particular embodiment, the metal containing layer has a honeycomb structured surface. In one further embodiment, the surface structures can have irregular patterns. In yet another embodiment, the metal containing layer has a surface roughness of at least 1 $\mu$m (micron), at least 2 $\mu$m (microns), at least 3 $\mu$m (microns), at least 4 $\mu$m (microns), or at least 5 $\mu$m (microns). In another embodiment, the metal containing layer has a surface roughness of not greater than 20 $\mu$m (microns), not greater than 15 $\mu$m (microns), not greater than 12 $\mu$m (microns), not greater than 10 $\mu$m (microns), or not greater than 8 $\mu$m (microns).

In order to obtain maximum corrosion resistance a minimum ratio of $t_2/t_1$ is necessary. The ratio of $t_2/t_1$ is at least 1/10. In order to maintain the tensile strength of the load bearing substrate 102, the ratio $t_1/t_2$ needs to remain below a maximum. In one embodiment, the ratio of $t_2/t_1$ is not greater than 1/3, not greater than ¼, not greater than 1/5, not greater than 1/6, not greater than 1/7, not greater than 1/8, or not greater than 1/9. In yet one further embodiment, the ratio of $t_2/t_1$ is in a range from 1/10 to ¼, in a range from 1/10 to 1/5, or in a range from 1/9 to 1/7.

A sliding layer 108 can be applied to the metal containing layer 104 with an adhesive layer 106. The sliding layer 108 can include a polymer, such as a fluoropolymer. Examples of polymers that can be used in sliding layer 108 include polytetrafluoroethylene (PTFE), fluorinated ethylene-propylene (FEP), polyvinylidenfluoride (PVDF), polychlorotrifluoroethylene (PCTFE), ethylene chlorotrifluoroethylene *(ECTFE),* perfluoroalkoxypolymer (PFA), polyacetal (POM), polybutylene terephthalate (PBT), polyimide (PI), polyamidimide (PAI), polyetherimide, polyetheretherketone (PEEK), polyethylene, such as ultrahigh molecular weight polyethylene (UHMWPE), polysulfone, polyamide, polyphenylene oxide, polyphenylene sulfide (PPS), polyurethane, polyester, or any combination thereof.

Additionally, the sliding layer 108 can include fillers, such as a friction reducing filler. Examples of fillers that can be used in the sliding layer 108 include glass, glass fibers, carbon, carbon fibers, silicon, graphite, PEEK, molybdenum disulfide, aromatic polyester, carbon particles, bronze, fluoropolymer, thermoplastic fillers, silicon carbide, aluminum oxide, polyamidimide (PAI), polyimide (PI), PPS, polyphenylene sulfone (PPSO2), liquid crystal polymers (LCP), aromatic polyesters (Econol), and mineral particles such as wollastonite, $CaF_2$, and barium sulfate, or any combination thereof. Fillers can be in the form of beads, fibers, powder, mesh, fleece, or any combination thereof.

Addressing the thickness of the sliding layer, in one embodiment, the sliding layer has a thickness of at least about 0.05 mm, such as at least about 0.1 mm, at least about 0.15 mm, at least about 0.2 mm, at least about 0.25 mm, at least about 0.3 mm, at least about 0.35 mm, at least about 0.4 mm, or at least about 0.45 mm. In another embodiment, the sliding layer has a thickness of not greater than about 2 mm, such as not greater than about 1.5 mm, not greater than about 1 mm, not greater than about 0.9 mm, not greater than about 0.8 mm, not greater than about 0.7 mm, not greater than about 0.6 mm, not greater than about 0.55 mm, or not greater than about 0.5 mm. In one embodiment, the sliding layer has a thickness in a range between 0.05 mm and 2 mm, in a range between 0.2 mm and 1 mm, or in a range between 0.3 mm and 0.7 mm.

In addressing the tensile strength of the loadbearing substrate and the metal containing layer, in one embodiment, the combined tensile strength of the load bearing substrate and the metal containing is at least 70% of the tensile strength of the load bearing substrate, at least 75% of the tensile strength of the load bearing substrate, at least 80% of the tensile strength of the load bearing substrate, at least 80% of the tensile strength of the load bearing substrate, at least 85% of the tensile strength of the load bearing substrate, at least 90% of the tensile strength of the load bearing substrate, at least 95% of the tensile strength of the load bearing substrate, at least 98% of the tensile strength of the load bearing substrate, at least 99% of the tensile strength of the load bearing substrate, at least 99.9% of the tensile strength of the load bearing substrate, or at least 99.99% of the tensile strength of the load bearing substrate.

In an example, the sliding layer 108 may include a woven mesh or an expanded metal grid. The woven mesh or expanded metal grid can include a metal or metal alloy such as aluminum, steel, stainless steel, bronze, or the like.

Alternatively, the woven mesh can be a woven polymer mesh. In an alternate embodiment, the sliding layer may not include a mesh or grid. In another alternate embodiment, the woven mesh, a fleece or expanded metal grid may be embedded between adhesive layers 106 and sliding layer 108.

In one embodiment, the expanded metal layer has a mesh size of at least 10 mesh/2.54 cm (inch), such as at least 11 mesh/2.54 cm (inch), at least 13 mesh/2.54 cm (inch), at least 15 mesh/2.54 cm (inch), at least 17 mesh/2.54 cm (inch), at least 19 mesh/2.54 cm (inch), or at least 21 mesh/2.54 cm (inch). In another embodiment, the expanded metal layer has a thickness of at least 0.1 mm, such as at least 0.2 mm, at least 0.3 mm, at least 0.4 mm, at least 0.5 mm, or at least 0.6 mm. In yet another embodiment, the expanded metal layer has a thickness of not greater than 1 mm, not greater than 0.9 mm, not greater than 0.8 mm, not greater than 0.7 mm, not greater than 0.6 mm, not greater than 0.55 mm, or not greater than 0.5 mm.

Returning to FIG. 1, adhesive layer 106 can be a hot melt adhesive. Examples of adhesive that can be used in adhesive layer 106 include fluoropolymers, an epoxy resins, a polyimide resins, a polyether/polyamide copolymers, ethylene vinyl acetates, Ethylene tetrafluoroethylene (ETFE), ETFE copolymer, perfluoroalkoxy (PFA), or any combination thereof. Additionally, the adhesive layer 106 can include at least one functional group selected from -C=O, -C-O-R, -COH, -COOH, -COOR, - $CF_2$=CF-OR, or any combination thereof, where R is a cyclic or linear organic group containing between 1 and 20 carbon atoms. Additionally, the adhesive layer 106 can include a copolymer. In an embodiment, the hot melt adhesive can have a melting temperature of not greater than about 250°C, such as not greater than about 220°C. In another embodiment, the adhesive layer 112 may break down above about 200°C, such as above about 220°C. In further embodiments, the melting temperature of the hot melt adhesive can be higher than 250°C, even higher than 300°C.

Referring to FIG. 1B, in another embodiment, the metal containing layer 104 is located adjacent to the loadbearing substrate and opposite to the sliding layer 108. In those embodiments, the metal containing layer serves as a corrosion resistant layer or a passivation layer. In an assembly, the metal containing layer 104 as shown in FIG. 1B contacts another metal part. Layer 104 acts as a sacrificial anode to protect the assembly from corrosion.

Referring to FIG. 1C, another embodiment includes the presence of two metal containing layers 1042 and 1044 adjacent to the loadbearing substrate overlying opposite surfaces of the loadbearing substrate 102. In this embodiment, layer 1042 can have a thickness $t_2$ and layer 1044 can have a thickness $t_3$. Layers 1042 and 1044 can be the same or differ in thickness, aluminum content, or surface structure.

With respect to FIG. 1C, a ratio of $(t_2+t_3)/t_1$ is at least 1/10. In another embodiment, the ratio of $(t_2+t_3)/t_1$ is not greater than 1/3, not greater than 2/7, not greater than ¼, not greater than 2/9, or not greater than 1/5. In yet another embodiment, the ratio of $(t_2+t_3)/t_1$ is in a range from 1/10 to 1/3, in a range from 1/8 to 1/3, or in a range from 1/5 to 1/3.

Referring to FIG. 1D, in another embodiment, a load bearing substrate can include load bearing metal layers 102 and 1022, which can be the same or different in metal type, thickness, and composition. The loadbearing substrate can include metal containing layers 104, 1042, and 1044, which, as well, can be the same or differ in thickness, aluminum content, and surface structure.

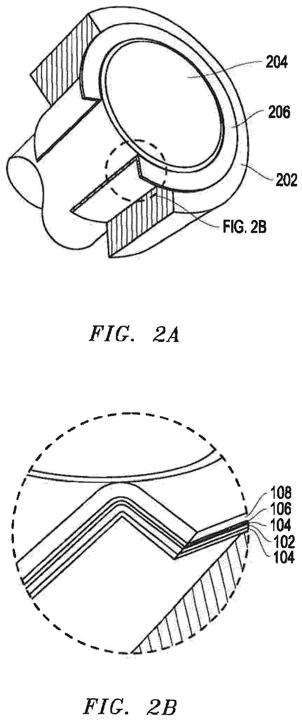

Laminates as shown in FIGs 1A-1D find applications as bushings. One example of such bushing is illustrated in FIGs. 2A and 2B. Referring to FIG. 2A, an assembly includes an outer component 202 and an inner component 204 and a bushing 206 placed between components 202 and 204. The bushing can have flange extending radially outward and overlying the outer component. For illustrative purpose, FIG. 2A discloses only a section of the bushing 206. In embodiments, the bushing 206 can form a closed cylinder. In another embodiment, the bushing 206 can be a cylinder including a slit that extends from the first axial end to the second axial end.

FIG. 2B discloses a detail of bushing 206, showing all the layers discussed herein with two metal containing layers 104 sandwiching, loadbearing substrate 102. In any embodiment, the bushing 206 has an edge that is exposed to the environment.

In one embodiment, the bushing can further include a functional layer adjacent to the loadbearing substrate opposite to the sliding layer. In one embodiment, the functional layer can be an additional sliding layer, an elastomeric layer, or a combination thereof. For the functional layer being an elastomeric layer, the elastomeric layer can include nitrile rubber, neoprene rubber, silicone rubber, an olefinic elastomer, a styrene elastomer, a thermoplastic elastomer, a crosslinked elastomer, a polyether-polyester elastomer, an ethylene-propylene elastomer, ethylene-acrylate rubbers and/or a fluoro elastomer.

For the elastomeric layer, the firm bond between the support material and elastic layer can be produced by means of a vulcanization process at a temperature of about 150-250°C. Here, crosslinking can occur within the elastomer and with the surface of the support material which has been activated by the bonding agent. The bonding layer which is thus present between support material and elastic layer can comprise at least one reactive polymer, in particular a polymer based on silane, and/or pigments in a solvent, in particular in methyl isobutyl ketone, in xylene, in ethanol and water or in ethanol and methyl ethyl ketone.

Turning to the method of forming the bushing, the sliding layer can be glued to the load bearing substrate using a melt adhesive to form a laminate sheet. The laminate sheet can be cut into strips or blanks that can be formed into the bushing. Cutting the laminate sheet can create cut edges including an exposed portion of the load bearing substrate. The blanks can be formed into the bushing, such as by rolling and flanging the laminate to form a semi-finished bushing of a desired shape.

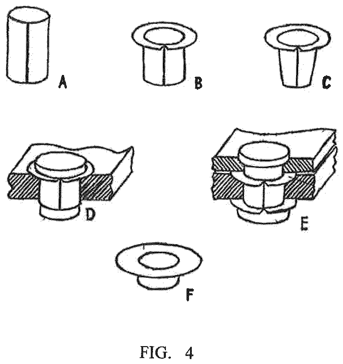

Fig. 4 depicts exemplary shapes or applications of the bushing. For example, the bushing can be a plain cylinder (4A), or include a flange (4B). In another embodiment, the bushing can be conical with a flange (4C) or without a flange (not shown). Embodiment 4D depicts a bushing with an inner element and an outer element. Embodiment 4E depicts a bushing with an inner element separated from a first outer element by the bushing but in contact with a second outer element adjacent to the first outer element; a bushing flange separates the first and second outer elements. For example, door hinges can fall into the scope of embodiment 4E. Embodiment 4F shows a flanged bushing lacking a slit, which is usually present after shaping.

In an embodiment, the bearing with such a corrosion resistant coating can have a significantly increased lifetime, and in particular, the bearing can have a Corrosion Resistance Rating according to neutral salt spray test ISO 9227:2006. of at least 300 hours, at least 400 hours, at least 500 hours, at least 600 hours, at least 700 hours, at least 800 hours, at least 900 hours, at least 1000 hours, or at least 1100 hours. In another embodiment, the bushing has a corrosion resistance rating of not greater than 2000 hours, not greater than 1800 hours, not greater than 1600 hours, or not greater than 1500 hours.

Another feature of the bushings is the sizing capability of finished bushings. Sizing capacity is amount of plastic deformation the laminate of a bushing can undergo. Sizing capability is expressed in percentage decrease of wall thickness after a bushing has been deformed by an oversized pin. That is:

$$SC=(t_0-t_a)/t_0 \, ,$$

wherein SC is sizing capability, $t_0$ is the original thickness of the laminate and $t_a$ is the thickness after deformation by an oversized pin. Sizing capacity can be measured by stepwise deforming the bushing with an oversized pin. For example, a bushing can be deformed by 5% with a first pin and additional up to 5% with a second oversized pin, and up to 5% for each additional oversized pin.

In one embodiment, the bushing has sizing capability of at least 3%, at least 4%, at least 5%, at least 6%, at least 7%, at least 8%, at least 9%, at least 10%, at least 12%, at least 14%, at least 16%, or at least 18%.

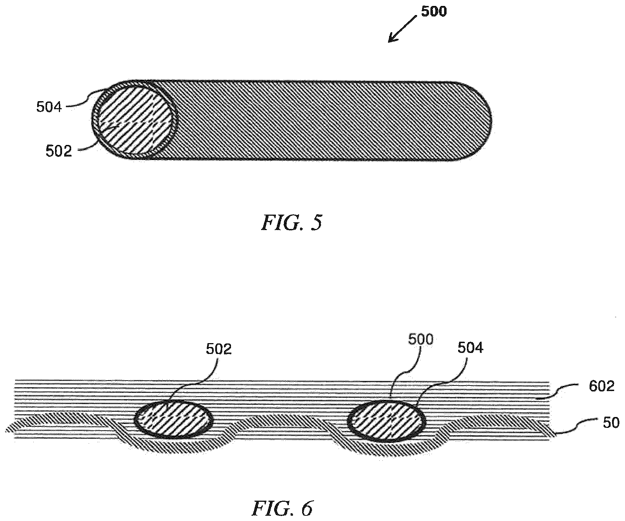

FIG. 5 depicts a wire 500. The wire has a core 502 of a metal comprising iron. In one embodiment, the core 502 can include iron, an iron alloy, or a combination thereof. In another embodiment, core 502 is steel. The wire 500 further includes a coating 504 substantially covering core 502. In one embodiment the coating 504 includes a metal that may have a Pauling Electronegativity of less then iron. In one embodiment, the coating can include a lacquer including metal particles of a metal with a Pauling Electronegativity less than iron. In another embodiment, the coating can include a metal foil. The coating is in direct contact with the core. In one embodiment, the coating can be applied to the core via deposition, such as chemical or physical vapor deposition, or electrochemical deposition (galvanizing). The coating can have a thickness $t_c$ that relates to the diameter $d_w$ of the wire 500. In one embodiment, $t_c/d_w$ is at least 0.001, such as at least 0.005, at least 0.01, at least 0.02, at least 0.05, at least 0.07, at least 0.1, at least 0.15, or at least 0.2. In another embodiment $t_c/d_w$ is not greater than 0.5, not greater than 0.45, not greater than 0.4, not greater than 0.35, not greater than 0.3, not greater than 0.25, or not greater than 0.2. In one embodiment, $t_c/d_w$ ranges from 0.001 to 0.25, such as from 0.005 to 0.2, or 0.01 to 0.15.

FIG. 6 depicts an exemplary laminate comprising a mesh made of wire 500. In one embodiment, the mesh can include warps and wefts made of wire 500, as depicted in FIG. 6. In other embodiments (not shown), the mesh can include wire 500 as wefts only while warp wires can include a different wire. That different wire can be made of steel only to allow higher loading capacity of the laminate. In another embodiment, the different wire can have a higher aluminum content to improve corrosion resistance. The wire 500 includes coating 504 and core 502 as described herein. The laminate further includes a sliding layer 602. Sliding layer can include the same material as described for layer 108 in FIG. 1. The mesh of wires 500 can be completely embedded in sliding layer 602 (not shown). In another embodiment, as shown in FIG. 6, the mesh can only be partly embedded in the sliding layer. Moreover, the sliding layer 602 can be affixed to the mesh of wires 500 via an adhesive layer (not shown) similar to layer 106 of FIG. 1. In one further embodiment, as shown in FIG. 6, the laminate is free of any continuous support layer. In one embodiment, the laminate consists essentially of the metal mesh, an adhesive layer, and a sliding layer. In another embodiment, the laminate consists essentially of the metal mesh and the sliding layer.

Further to the aspects not covered by the present invention, the mesh made out of wires 500 is exemplary to the porous metallic layer. In other embodiments, the mesh can be replaced with any porous metallic layer such as a non-woven metal felt, a metal foam, or stretch metal. Each of the porous metallic layer may include an iron containing phase and a phase containing a metal having a Pauling Electronegativity that is less than the Pauling Electronegativity of iron. In one embodiment, the iron containing phase is steel. In another embodiment the second phase is metal containing. In one embodiment, the two metallic phases are heterogeneous.

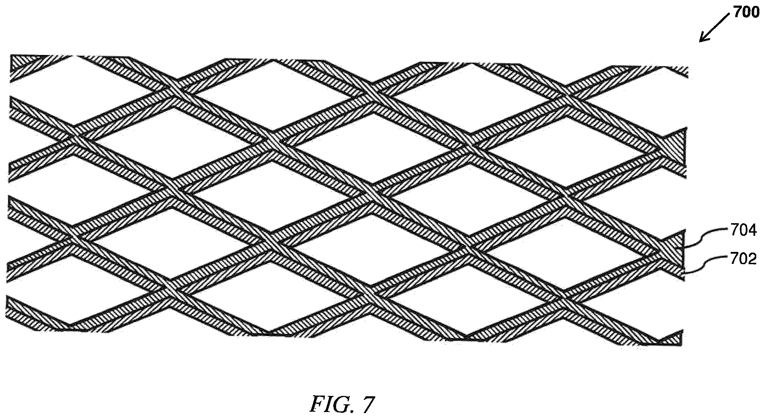

FIG. 7 depicts another example of a porous metallic layer, namely an expanded or stretch metal layer. The expanded metal layer includes a coating 704 overlying the metal sheet 702. In another embodiment (not shown in FIG. 7), the coating 704 does not cover the major surface of the metal sheet but lines the opening of the diamond-shaped openings. In yet another embodiment, the coating can partly cover the major surface of the metal sheet and partly the surface of the diamond-shaped openings. In yet one further embodiment, the coating 704 can cover both major surfaces of the stretch metal sheet. The stretch metal sheet 700 can be prepared from a solid metal sheet, such as a steel sheet, onto which a coating of a second metal of lesser electronegativity, such as aluminum is cladded on.

Examples

A Corrosion Resistance Rating is determined according to neutral salt spray test ISO 9227:2006. Samples are stored at room temperature for 24 hours prior testing. Samples are set on PVC racks or hung from a nylon thread and placed in to a salt spray chamber. At least 5 samples per variation of bushings are tested per salt spray test. A visual examination of the samples occurs in certain intervals.

For example, Sample 1 is prepared by cutting a blank from a laminate comprising 0.25 mm PTFE compound tape, 0.03 mm ETFE adhesive, and a substrate comprising 0.47 mm double side aluminum-cladded steel, wherein each aluminum layer is 20 $\mu$m (microns). Sample 1 is prepared by cutting a blank from a laminate comprising 0.25 mm PTFE compound tape, 0.03 mm ETFE adhesive, and a substrate comprising 0.45 mm double side aluminum-cladded steel, wherein each aluminum layer is 50 $\mu$m (microns). Accordingly, the difference between Sample 1 and Sample 2 is the thickness of the aluminum layers.

The samples are shaped to form the semi-finished bushing. The blank is shaped by rolling and flanging to obtain the desired shape. The Corrosion Resistance Rating of Sample 1 was determined to be less than 300 hours, i.e. red corrosion was observed at 300 hours. The Corrosion Resistance Rating of Sample 2 was determined to be at least 1000 hours, i.e. no observation of red corrosion at 1000 hours, and no red rust observation after 1500 hours and 3000 hours.

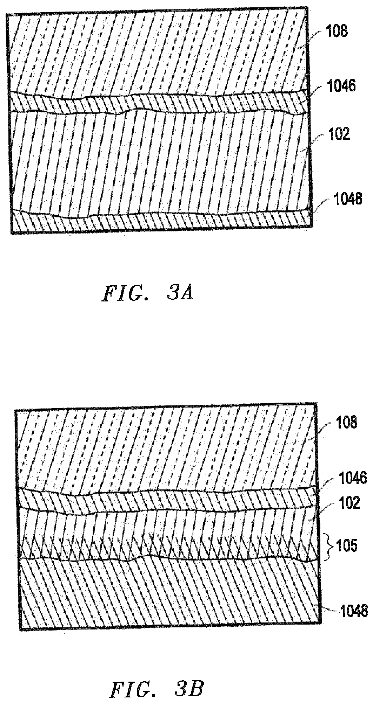

FIGs 3A and 3B depicts line diagrams of Scanning Electron Microscope scans (SEM) with an energy dispersive X-ray spectroscopy detector (EDS) of Sample 2 of an edge before and after the shaping. In FIG 3A, layers 1048 and 1046 are the 50 $\mu$m (microns) aluminum layers cladded onto steel layer 102. Sliding layer 108 is a PTFE tape and the adhesive layer between 108 and 1046 cannot be distinguished by EDS analysis. As can be seen after the shaping the substrate 102 is covered by aluminum from layer 1048 as a result of the shaping process. The coverage does not extend across the entire cross area of layer 102. In fact there is a transitional area 105 that shows the presence of iron and aluminum.

For Sizing capacity testing, three bushings having a wall thickness of 1mm. Bushing 1 was a standard SM material (SM100CG, available from Saint-Gobain Performance Plastics) with a 0.5mm double side aluminum-cladded steel, wherein each aluminum layer is 50 $\mu$m (microns), Bushing 2 was an SM 100CG bushing further including a 0.4 mm expanded aluminum (99.5) mesh in the sliding layer, and Bushing 3 was an SM 100CG bushing further including an 0.4 mm expanded aluminum magnesium alloy (AlMg$_3$) mesh in the sliding layer.

Sizing capacity was determined by the amount of deformation upon insertion of a series of 5 oversized pins having an oversize over the inner diameter of the bushing ranging from 0.02mm to 0.22 mm. The inner diameter of the three bushings was 15 mm. Table 1 depicts the resulting size capabilities (plastic deformation)

Table 1

| Pin | 1 | 2 | 3 | 4 | 5 |
|-----|-----|-----|-------|-----|-----|
| Bushing 1 | 9.5% | 11% | 12.5% | 15% | N/A |
| Bushing 2 | 7.5% | 8.5% | 11.5% | 13% | 16% |
| Bushing 3 | 10% | 12.5% | 14.5% | 16% | 18% |

shaped openings. In yet one further embodiment, the coating 704 can cover both major surfaces of the stretch metal sheet. The stretch metal sheet 700 can be prepared from a solid metal sheet, such as a steel sheet, onto which a coating of a second metal of lesser electronegativity, such as aluminum is cladded on.

Examples

A Corrosion Resistance Rating is determined according to neutral salt spray test ISO 9227:2006. Samples are stored at room temperature for 24 hours prior testing. Samples are set on PVC racks or hung from a nylon thread and placed in to a salt spray chamber. At least 5 samples per variation of bushings are tested per salt spray test. A visual examination of the samples occurs in certain intervals.

For example, Sample 1 is prepared by cutting a blank from a laminate comprising 0.25 mm PTFE compound tape, 0.03 mm ETFE adhesive, and a substrate comprising 0.47 mm double side aluminum-cladded steel, wherein each aluminum layer is 20 ($\mu$m).

Sample 1 is prepared by cutting a blank from a laminate comprising 0.25 mm PTFE compound tape, 0.03 mm ETFE adhesive, and a substrate comprising 0.45 mm double side aluminum-cladded steel, wherein each aluminum layer is 50 ($\mu$m).

Accordingly, the difference between Sample 1 and Sample 2 is the thickness of the aluminum layers.

The samples are shaped to form the semi-finished bushing. The blank is shaped by rolling and flanging to obtain the desired shape. The Corrosion Resistance Rating of Sample 1 was determined to be less than 300 hours, i.e. red corrosion was observed at 300 hours. The Corrosion Resistance Rating of Sample 2 was determined to be at least 1000 hours, i.e. no observation of red corrosion at 1000 hours, and no red rust observation after 1500 hours and 3000 hours.

FIGs 3A and 3B depicts line diagrams of Scanning Electron Microscope scans (SEM) with an energy dispersive X-ray spectroscopy detector (EDS) of Sample 2 of an edge before and after the shaping. In FIG 3A, layers 1048 and 1046 are the 50 ($\mu$m) aluminum layers cladded onto steel layer 102. Sliding layer 108 is a PTFE tape and the adhesive layer between 108 and 1046 cannot be distinguished by EDS analysis. As can be seen after the shaping the substrate 102 is covered by aluminum from layer 1048 as a result of the shaping process. The coverage does not extend across the entire cross area of layer 102. In fact there is a transitional area 105 that shows the presence of iron and aluminum.

For Sizing capacity testing, three bushings having a wall thickness of 1mm. Bushing 1 was a standard SM material (SM100CG, available from Saint-Gobain Performance Plastics) with a 0.5mm double side aluminum-cladded steel, wherein each aluminum layer is 50 ($\mu$m),

Bushing 2 was an SM 100CG bushing further including a 0.4 mm expanded aluminum (99.5) mesh in the sliding layer, and Bushing 3 was an SM 100CG bushing further including an 0.4 mm expanded aluminum magnesium alloy ($AlMg_3$) mesh in the sliding layer.

Sizing capacity was determined by the amount of deformation upon insertion of a series of 5 oversized pins having an oversize over the inner diameter of the bushing ranging from 0.02mm to 0.22 mm. The inner diameter of the three bushings was 15 mm. Table 1 depicts the resulting size capabilities (plastic deformation)

Table 1

| Pin | 1 | 2 | 3 | 4 | 5 |
|-----|-----|-----|-------|-----|-----|
| Bushing 1 | 9.5% | 11% | 12.5% | 15% | N/A |
| Bushing 2 | 7.5% | 8.5% | 11.5% | 13% | 16% |
| Bushing 3 | 10% | 12.5% | 14.5% | 16% | 18% |

**Claims**

1. A sliding bushing comprising:

   a load bearing substrate (102), having a first major surface, a second major surface, and an edge, the load bearing substrate (102) having a thickness t1,
   a metal containing layer (104; 1042) which is a corrosion protective layer and which is overlying and in direct contact with the first major surface, the metal containing layer (104; 1042) having a thickness t2,
   wherein the metal containing layer (104; 1042) contains a metal selected from magnesium, aluminum, titanium, scandium, zinc, or any combination thereof,
   a sliding layer (108) overlying the first or the second major surface,
   **characterized in that**
   a ratio of t2/t1 is at least 1/10, wherein t2 is at least 25 $\mu$m (microns) and not greater than 200 $\mu$m (microns).

2. A hinge assembly comprising :

   a first hinge portion and a second hinge portion;
   a pin joining the first hinge portion with the second hinge portion; and

the sliding bushing of claim 1.

3. The sliding bushing according to claim 1 or the hinge assembly according to claim 2, further comprising an additional metal containing layer (1044) overlying and in direct contact with the second major surface, the additional metal containing layer (1044) having a thickness t3.

4. The sliding bushing according to claims 1 or 3 or the hinge assembly according to claim 2 or 3, further comprising a functional layer overlying the load bearing substrate (102) opposite the sliding layer (108).

5. The sliding bushing or the hinge assembly according to claim 4, wherein the functional layer is a second sliding layer.

6. The sliding bushing or the hinge assembly according to claim 4, wherein the functional layer is an elastomeric layer.

7. The sliding bushing or the inge assembly according to claim 6, wherein the elastomeric layer includes at least one of nitrile rubber, neoprene rubber, silicone rubber, an olefinic elastomer, a styrene elastomer, a thermoplastic elastomer, a crosslinked elastomer, a polyether-polyester elastomer, an ethylene-propylene elastomer, ethylene-acrylate rubbers and/or a fluoro elastomer.

8. The sliding bushing or the hinge assembly according to claim 3, wherein a ratio of $(t_2+t_3)/t_1$ is not greater than 1/3.

9. The sliding bushing according to claim 1 to 8 or the hinge assembly according to claims 2 to 8, wherein the ratio of t2/t1 is not greater than 1/3.

10. The sliding bushing according to claim 1 to 9 or the hinge assembly according to claim 2 to 9, wherein t1 is at least 25 $\mu$m (microns) and not greater than 2200 $\mu$m (microns).

11. The sliding bushing according to claim 1 to 10 or the hinge assembly according to claim 2 to 10, wherein the load bearing substrate (102) contains a metal selected from an iron, tin, copper, zinc, titanium, scandium, vanadium, chromium, manganese, cobalt, nickel, or any combination thereof.

12. The sliding bushing according to claim 1 to 11 or the hinge assembly according to claim 2 to 11, wherein the metal containing layer (104) has an aluminum content of at least 20 wt% and not greater than 99.99999 wt%.

13. The sliding bushing according to claim 1 to 12 or the hinge assembly according to claim 2 to 12, wherein the sliding layer (108) comprises a fluoropolymer.

14. The sliding bushing according to claim 1 to 13 or the hinge assembly according to claim 2 to 13, wherein the sliding layer (108) comprises a polytetrafluoroethylene (PTFE), a modified PTFE (TFM), a fluorinated ethylene propylene (FEP), a polyvinylidene fluoride (PVDF), a polyamide (PA), a polyether ether ketone (PEEK), a polyimide (PI), a polyamideimide (PAI), a polyphenylene sulfide (PPS), a polyphenylene sulphone (PPSO2), a liquid crystal polymers (LCP), perfluoroalkoxypolymer (PFA), a perfluoro methyl alkoxy (MFA), polyoxymethylene (POM), polyethylene (PE), UHMWPE, or a mixture thereof.

**Patentansprüche**

1. Gleitbuchse, umfassend:

ein lasttragendes Substrat (102), das eine erste Hauptoberfläche, eine zweite Hauptoberfläche und eine Kante aufweist, wobei das lasttragende Substrat (102) eine Dicke t1 aufweist,
eine metallhaltige Schicht (104; 1042), die eine Korrosionsschutzschicht ist und die über der ersten Hauptoberfläche liegt und in direktem Kontakt mit ihr steht, wobei die metallhaltige Schicht (104; 1042) eine Dicke t2 aufweist,
wobei die metallhaltige Schicht (104; 1042) ein Metall enthält, das aus Magnesium, Aluminium, Titan, Scandium, Zink oder einer beliebigen Kombination davon ausgewählt ist,
eine Gleitschicht (108), die über der ersten oder der zweiten Hauptoberfläche liegt,
**dadurch gekennzeichnet, dass**
ein Verhältnis von t2/t1 mindestens 1/10 beträgt, wobei t2 mindestens 25 $\mu$m (Mikrometer) und nicht mehr als

200 μm (Mikrometer) beträgt.

2. Scharnieranordnung, umfassend:

einen ersten Scharnierabschnitt und einen zweiten Scharnierabschnitt;
einen Stift, der den ersten Scharnierabschnitt mit dem zweiten Scharnierabschnitt verbindet; und
die Gleitbuchse nach Anspruch 1.

3. Gleitbuchse nach Anspruch 1 oder Scharnieranordnung nach Anspruch 2, ferner umfassend eine zusätzliche metallhaltige Schicht (1044), die über der zweiten Hauptoberfläche liegt und in direktem Kontakt mit ihr steht, wobei die zusätzliche metallhaltige Schicht (1044) eine Dicke t3 aufweist.

4. Gleitbuchse nach Anspruch 1 oder 3 oder Scharnieranordnung nach Anspruch 2 oder 3,ferner umfassend eine Funktionsschicht, die über dem lasttragenden Substrat (102) gegenüber der Gleitschicht (108) liegt.

5. Gleitbuchse oder Scharnieranordnung nach Anspruch 4, wobei die Funktionsschicht eine zweite Gleitschicht ist.

6. Gleitbuchse oder Scharnieranordnung nach Anspruch 4, wobei die Funktionsschicht eine Elastomerschicht ist.

7. Gleitbuchse oder Scharnieranordnung nach Anspruch 6, wobei die Elastomerschicht mindestens eines von Nitrilkautschuk, Neoprenkautschuk, Silikonkautschuk, einem olefinischen Elastomer, einem Styrolelastomer, einem thermoplastischen Elastomer, einem vernetzten Elastomer, einem Polyether-Polyester-Elastomer, einem Ethylen-Propylen-Elastomer, Ethylen-Acrylat-Kautschuken und/oder einem Fluorelastomer einschließt.

8. Gleitbuchse oder Scharnieranordnung nach Anspruch 3, wobei ein Verhältnis von (t2+t3)/t1 nicht größer als 1/3 ist.

9. Gleitbuchse nach Anspruch 1 bis 8 oder Scharnieranordnung nach den Ansprüchen 2 bis 8, wobei das Verhältnis von t2/t1 nicht größer als 1/3 ist.

10. Gleitbuchse nach Anspruch 1 bis 9 oder Scharnieranordnung nach Anspruch 2 bis 9, wobei t1 mindestens 25 μm (Mikrometer) und nicht mehr als 2200 μm (Mikrometer) beträgt.

11. Gleitbuchse nach Anspruch 1 bis 10 oder Scharnieranordnung nach Anspruch 2 bis 10, wobei das lasttragende Substrat (102) ein Metall enthält, das aus einem Eisen, Zinn, Kupfer, Zink, Titan, Scandium, Vanadium, Chrom, Mangan, Kobalt, Nickel oder einer beliebigen Kombination davon ausgewählt ist.

12. Gleitbuchse nach Anspruch 1 bis 11 oder Scharnieranordnung nach Anspruch 2 bis 11, wobei die metallhaltige Schicht (104) einen Aluminiumgehalt von mindestens 20 Gew.-% und nicht mehr als 99,99999 Gew.-% aufweist.

13. Gleitbuchse nach Anspruch 1 bis 12 oder Scharnieranordnung nach Anspruch 2 bis 12, wobei die Gleitschicht (108) ein Fluorpolymer umfasst.

14. Gleitbuchse nach Anspruch 1 bis 13 oder Scharnieranordnung nach Anspruch 2 bis 13, wobei die Gleitschicht (108) ein Polytetrafluorethylen (PTFE), ein modifiziertes PTFE (TFM), ein fluoriertes Ethylenpropylen (FEP), ein Polyvinylidenfluorid (PVDF), ein Polyamid (PA), ein Polyetheretherketon (PEEK), ein Polyimid (PI), ein Polyamidimid (PAI), ein Polyphenylensulfid (PPS), ein Polyphenylensulfon (PPSO2), Flüssigkristallpolymere (LCP), Perfluoralkoxypolymer (PFA), ein Perfluormethylalkoxy (MFA), Polyoxymethylen (POM), Polyethylen (PE), UHMWPE oder eine Mischung davon umfasst.

**Revendications**

1. Douille de glissement comprenant :

un substrat porteur de charge (102), ayant une première surface principale, une seconde surface principale, et un bord, le substrat porteur de charge (102) ayant une épaisseur t1,
une couche contenant du métal (104 ; 1042) qui est une couche de protection contre la corrosion et qui se trouve au-dessus et en contact direct avec la première surface principale, la couche contenant du métal (104 ;

1042) ayant une épaisseur t2,
dans laquelle la couche contenant du métal (104 ; 1042) contient un métal choisi parmi magnésium, aluminium, titane, scandium, zinc, ou n'importe quelle combinaison de ceux-ci,
une couche de glissement (108) se trouvant au-dessus de la première ou la seconde surface principale,
**caractérisée en ce que**
un rapport de t2/t1 vaut au moins 1/10, t2 valant au moins 25 $\mu$m (micromètres) et ne dépassant pas 200 $\mu$m (micromètres).

2. Ensemble charnière comprenant :

une première partie de charnière et une seconde partie de charnière ;
une goupille reliant la première partie de charnière à la seconde partie de charnière ; et
la douille de glissement selon la revendication 1.

3. Douille de glissement selon la revendication 1 ou ensemble charnière selon la revendication 2, comprenant en outre une couche supplémentaire contenant du métal (1044) se trouvant au-dessus et en contact direct avec la seconde surface principale, la couche supplémentaire contenant du métal (1044) ayant une épaisseur t3.

4. Douille de glissement selon les revendications 1 ou 3 ou ensemble charnière selon la revendication 2 ou 3, comprenant en outre une couche fonctionnelle se trouvant au-dessus du substrat porteur de charge (102) opposée à la couche de glissement (108).

5. Douille de glissement ou ensemble charnière selon la revendication 4, dans lequel la couche fonctionnelle est une seconde couche de glissement.

6. Douille de glissement ou ensemble charnière selon la revendication 4, dans lequel la couche fonctionnelle est une couche élastomère.

7. Douille de glissement ou ensemble charnière selon la revendication 6, dans lequel la couche élastomère comporte au moins l'un parmi caoutchouc nitrile, caoutchouc néoprène, caoutchouc de silicone, un élastomère oléfinique, un élastomère de styrène, un élastomère thermoplastique, un élastomère réticulé, un élastomère polyéther-polyester, un élastomère éthylène-propylène, des caoutchoucs éthylène-acrylate et/ou un fluoroélastomère.

8. Douille de glissement ou ensemble charnière selon la revendication 3, dans lequel un rapport de (t2+t3)/t1 n'est pas supérieur à 1/3.

9. Douille de glissement selon la revendication 1 à 8 ou ensemble charnière selon les revendications 2 à 8, dans lequel le rapport de t2/t1 n'est pas supérieur à 1/3.

10. Douille de glissement selon la revendication 1 à 9 ou ensemble charnière selon la revendication 2 à 9, dans lequel t1 vaut au moins 25 $\mu$m (micromètres) et ne dépasse pas 2200 $\mu$m (micromètres).

11. Douille de glissement selon la revendication 1 à 10 ou ensemble charnière selon la revendication 2 à 10, dans lequel le substrat porteur de charge (102) contient un métal choisi parmi fer, étain, cuivre, zinc, titane, scandium, vanadium, chrome, manganèse, cobalt, nickel, ou n'importe quelle combinaison de ceux-ci.

12. Douille de glissement selon la revendication 1 à 11 ou ensemble charnière selon la revendication 2 à 11, dans lequel la couche contenant du métal (104) a une teneur en aluminium d'au moins 20 % en poids et ne dépassant pas 99,99999 % en poids.

13. Douille de glissement selon la revendication 1 à 12 ou ensemble charnière selon la revendication 2 à 12, dans lequel la couche de glissement (108) comprend un fluoropolymère.

14. Douille de glissement selon la revendication 1 à 13 ou ensemble charnière selon la revendication 2 à 13, dans lequel la couche de glissement (108) comprend un polytétrafluoroéthylène (PTFE), un PTFE modifié (TFM), un éthylène-propylène fluoré (FEP), un fluorure de polyvinylidène (PVDF), un polyamide (PA), une polyéther-éther-cétone (PEEK), un polyimide (PI), un polyamide-imide (PAI), un sulfure de polyphénylène (PPS), une polyphénylène-sulfone (PPSO2), un polymère à cristaux liquides (LCP), un perfluoroalcoxypolymère (PFA), un perfluoro méthyl-alcoxy (MFA), du polyoxyméthylène (POM), du polyéthylène (PE), de l'UHMWPE, ou un mélange de ceux-ci.

FIG. 1A

FIG. 1B

FIG. 1C

FIG. 1D

FIG. 2A

FIG. 2B

FIG. 3A

FIG. 3B

FIG. 4

*FIG. 5*

*FIG. 6*

FIG. 7

**EP 3 779 219 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2465852 A
- JP 2015200339 A